# EUROPÄISCHE PATENTSCHRIFT

(11) **EP 2 943 690 B1**
(45) Veröffentlichungstag und Bekanntmachung des Hinweises auf die Patenterteilung: **22.06.2016**
(21) Anmeldenummer: 13815767.2
(22) Anmeldetag: 24.12.2013
(51) Int. Cl.: F15B 15/14, B23P 19/02, B23P 19/10

(54) **VORRICHTUNG ZUR MONTAGE UND DEMONTAGE VON HYDRAULIKZYLINDERN**
DEVICE FOR ASSEMBLING AND DISASSEMBLING HYDRAULIC CYLINDERS
DISPOSITIF D'ASSEMBLAGE ET DE DÉSASSEMBLAGE DE VÉRINS HYDRAULIQUES

(30) Priorität: 10.01.2013 DE 102013000319; 31.01.2013 DE 102013001675
(43) Veröffentlichungstag der Anmeldung: 18.11.2015
(73) Patentinhaber: Zeppelin Baumaschinen GmbH, 85748 Garching (DE); Trenkle, Martin, 85221 Dachau (DE)
(72) Erfinder: TRENKLE, Martin, 85221 Dachau (DE); LUIDL, Werner, 85716 Unterschleißheim (DE)
(74) Vertreter: Kruspig, Volkmar
(86) Internationale Anmeldenummer: PCT/EP2013/077967
(87) Internationale Veröffentlichungsnummer: WO 2014/108313

(56) Entgegenhaltungen:
- CN-U- 201 442 170
- CN-U- 202 224 914
- DE-A1- 3 712 961
- US-A- 3 900 938

## Beschreibung

Die Erfindung betrifft eine Vorrichtung zur Montage und Demontage von Hydraulikzylindern, bestehend aus einem sockelartigen Maschinengestell, welches horizontal angeordnete Führungsmittel aufweist, die verschiebebeweglich eine Aufnahme für das Zylinderrohr des Hydraulikzylinders, mindestens eine Aufnahme für eine Stütze und für eine Aufnahme eines Werkzeugs tragen, sowie weiterhin mit einer Halterung zum Fixieren der Kolbenstange des Hydraulikzylinders gemäß Oberbegriff des Patentanspruchs 1.

Aus der US 4,723,348 B ist eine Vorrichtung zum Fixieren eines Hydraulikzylinders zum Zweck der Reparatur desselben vorbekannt. Diese Vorrichtung besteht aus einem balkenartigen Gestell, welches eine Aufnahmevorrichtung für den Hydraulikzylinder umfasst. Weiterhin ist ein hydraulisch betätigbarer Mechanismus vorhanden, mit dessen Hilfe die Kolbenstange des zu reparierenden Hydraulikzylinders gelöst werden kann. Die betreffende Vorrichtung weist nur einen geringen Mechanisierungs- bzw. Automatisierungsgrad auf und ist für die Montage oder Demontage von großdimensionierten Hydraulikzylindern, wie insbesondere bei deren Einsatz in Baumaschinen nicht geeignet.

Bei dem gattungsbildenden Patent US 3,900,938 ist eine Servicevorrichtung für das Montieren und Demontieren von Hydraulikzylindern gezeigt, welche ein sockelartiges Maschinengestell in Tischform umfasst, welches horizontal angeordnete Führungsmittel aufweist.

Als Führung dient hier ein Metallprofil, das schuhartig von einer Aufnahme für das Zylinderrohr des Hydraulikzylinders, mindestens einer Aufnahme für eine Stütze und einer Aufnahme für ein Werkzeugs umgriffen wird.

Darüber hinaus ist eine Halterung zum Fixieren der Kolbenstange des Hydraulikzylinders vorhanden.

Nachdem der zu Servicezwecken in die Vorrichtung eingebrachte Hydraulikzylinder fixiert wurde, besteht die Möglichkeit, mittels eines hydraulischen Hebelantriebs das Zylinderrohr in Drehbewegung zu versetzen, so dass ein Überwurfring mit Hilfe der Werkzeugaufnahme gelöst werden kann und hiernach Kolben und Kolbenstange aus dem Zylinder entfernbar sind. Ausfließendes Hydrauliköl kann von einem wannenartigen Gefäß unterhalb des Maschinengestells aufgefangen werden.

Die Aufnahme für das Zylinderrohr ist in Längsachsenrichtung mittels eines hydraulischen Spindelantriebs verstellbar, so dass Hydraulikzylinder unterschiedlicher Längenabmessungen montiert und demontiert werden können.

Bedingt durch die Art des hydraulischen Antriebs nach US 3,900,938 kann das Lösen der Überwurfmutter am Hydraulikzylinder nur in mehreren Schritten, d.h. mit großem Zeitaufwand vorgenommen werden. Eine definierte Kontrolle des Anzugdrehmoments bei der Montage entsprechender Zylinder ist nicht möglich, was mit einer Gefahr beim späteren bestimmungsgemäßen Betrieb der Hydraulikzylinder in entsprechenden Maschinen und Anlagen einhergeht.

Aus dem Vorgenannten ist es daher Aufgabe der Erfindung, eine weiterentwickelte Vorrichtung zur Montage und Demontage von Hydraulikzylindern, insbesondere Hydraulikzylindern sehr großer Abmessungen, anzugeben, welche einen hohen Mechanisierungs- und Automatisierungsgrad aufweist und die insbesondere bei der Montage überholter Zylinder entsprechend den Herstellervorschriften reproduzierbare Bedingungen gewährleistet.

Die zu schaffende Vorrichtung soll so ausgebildet werden, dass selbige ohne großen Aufwand sofort in Reparaturwerkstätten und entsprechenden Dienstleistungsbetrieben einsetzbar ist. Auch soll die Verwendung der Vorrichtung auf Baustellen möglich sein, ohne dass umfangreiche Maßnahmen zu deren Einsatz im Vorfeld zu planen bzw. vorzusehen sind.

Die Lösung der Aufgabe der Erfindung erfolgt durch eine Vorrichtung zur Montage und Demontage von Hydraulikzylindern gemäß der Merkmalskombination nach Patentanspruch 1, wobei die Unteransprüche mindestens zweckmäßige Ausgestaltungen und Weiterbildungen umfassen.

Es wird demgemäß von einer Vorrichtung zur Montage und Demontage von Hydraulikzylindern ausgegangen, welche aus einem sockelartigen Maschinengestell, ein Maschinenbett bildend, besteht.

Das Maschinengestell bzw. das Maschinenbett weist horizontal angeordnete Führungsmittel auf. Diese Führungsmittel tragen eine Aufnahme für das Zylinderrohr des Hydraulikzylinders, mindestens eine Aufnahme für eine Stütze und einer Aufnahme für ein Werkzeug. Weiterhin ist eine Halterung zum Fixieren der Kolbenstange des betreffenden Hydraulikzylinders vorgesehen.

Erfindungsgemäß besitzt die Halterung zum Fixieren der Kolbenstange einen von einer Zentrierspindel angetriebenen Zentrierschlitten. Dieser Zentrierschlitten umfasst eine Kolbenstangenaufnahme. Die Halterung selbst ist um die Längsachse des Maschinengestells drehbar ausgeführt, wobei die Drehbewegung über einen drehmomentgesteuerten elektromechanischen Antrieb realisiert ist.

Durch die erfindungsgemäße Zentrierung mit Hilfe von Zentrierspindel und Zentrierschlitten kann eine sehr exakte Positionierung des zu überholenden Hydraulikzylinders in der Vorrichtung vorgenommen werden, ohne dass Kräfte auftreten, die zu einer Beschädigung der Zylinderrohrinnenwandung und/oder des Kolbens bzw. der Kolbenstange führen können.

Mit Hilfe der erfindungsgemäßen Drehmomentsteuerung des elektromechanischen Antriebs sind sowohl die Kräfte beim Lösen als auch beim Befestigen von Muttern oder sonstigen kraftschlüssigen Verbindungen vorgeb-, erfass- und kontrollierbar. Eine hohe Qualität und eine beschädigungsfreie Überholung der Zylinder mit entsprechender Montage wird hierdurch gewährleistet.

In weiterer Ausbildung der Erfindung weist die verschiebebewegliche Aufnahme für das Zylinderrohr einen von einer weiteren Zentrierspindel angetriebenen Zentrierschlitten auf, wobei die Verschiebebeweglichkeit in Längsachsenrichtung des Maschinengestells realisiert ist.

Im Hinblick auf diese Ausgestaltung ist also sowohl das Zylinderrohr als auch die Kolbenstange zentrierbar und es ist eine Anpassung an unterschiedliche Konfigurationen der Hydraulikzylinder hinsichtlich deren Länge und Durchmesser möglich.

Die Werkzeugaufnahme umfasst in einer erfindungsgemäßen Weiterbildung einen Verschiebeschlitten mit Tragarmen.

Die Tragarme bilden entweder eine schlitzförmige Ausnehmung oder weisen ein Aufnahmeteil mit einer solchen Ausnehmung auf, so dass ein austauschbares Halten eines Werkzeugs möglich ist. Über die schlitzförmige Ausnehmung kann das entsprechende Werkzeug mit den auf den Hydraulikzylinder abgestimmten Werkzeugabmessungen leicht, insbesondere von oben eingeschoben und wieder entnommen werden.

Das betreffende Werkzeug besitzt eine Ausformung oder einen Durchbruch, insbesondere ausgebildet als Schlüsselfläche, um die Kolbenstangenmutter zu lösen.

Die Halterung zum Fixieren des Hydraulikzylinders ist gemäß der erfindungsgemäßen Lösung fest am Maschinengestell befindlich und insbesondere mit diesem Gestell verschraubt. Alternativ besteht die Möglichkeit, die Halterung zum Fixieren des Hydraulikzylinders zwar arretierbar, aber auch nach Lösen einer Arretierung drehbar auszuführen. Eine solche Möglichkeit des Verdrehens des Hydraulikzylinders um seine Längsachse ermöglicht es, den Zylinder mit gegebenenfalls dort vorhandenen Hydraulikanschlüssen jeweils in eine optimale Position zu einem Monteur oder Bearbeiter zu überführen, so dass dieser ohne Positionswechsel bezüglich der Vorrichtung in der Lage ist, alle erforderlichen Arbeiten vorzunehmen.

Alle beim Montieren und Demontieren auftretenden Kräfte können so ohne weiteres in das Maschinengestell abgetragen und von diesem aufgenommen werden. Das Maschinengestell ist selbsttragend und statisch verzugsfrei ausgebildet. Durch die selbsttragende Ausgestaltung des Maschinengestells kann dieses auf üblichen verfestigten Bögen zum Einsatz kommen. Eine Verankerung der Vorrichtung z.B. in Ortbeton ist nicht erforderlich.

Der elektromotorische, drehmomentgesteuerte Antrieb kann einen Getriebemotor und eine entsprechende elektronische Steuerung umfassen, die mit einer Drehmomentsensorik zusammenwirkt, die die zwischen Werkzeug und Hydraulikzylinder auftretenden Kräfte und Momente erfasst und auswertet.

Selbstverständlich kann beim Einsatz drehmomentgesteuerter elektromotorischer Antriebe eine maximale Momentvorgabe realisiert werden, um mechanische Zerstörungen bei festsitzenden kraftschlüssigen Verbindungen auszuschließen.

Die bereits erwähnte Aufnahme für das Zylinderrohr und die Aufnahme für das Werkzeug sind mittels eines weiteren elektromotorischen Antriebs, ausgebildet als Fahrantrieb, verschiebebeweglich. Eine Verstellung oder Verschiebung von Hand kann diesbezüglich entfallen.

Die Verschiebebeweglichkeit wird über eine um oder am Maschinengestell vorhandene Rollen- oder Gleitführung realisiert, die auch ein Verkanten verhindert und in der Lage ist, die wirkenden Kräfte beim Montage- bzw. Demontagevorgang aufzunehmen. Die insbesondere Rollenführung ermöglicht es, auch ein händisches Verschieben der Position des Hydraulikzylinders bezogen auf Kolben und Kolbenstange vorzunehmen, da die Reibungskräfte, die es zu überwinden gilt, sehr gering sind. Bei einer Demontage von Kolben und Zylinder durch Auseinanderziehen dieser Bauteile ist die Arbeitssicherheit bedingt durch die vorteilhafte Rollenführung erhöht.

Die mindestens eine vorgesehene Stütze für das Zylinderrohr und/oder die Kolbenstange ist bzw. sind höhenverstellbar ausgeführt. Diese Höhenverstellung kann mit Hilfe eines umlaufenden Schneckengewindes realisiert werden. Alternativ kann auch eine eingeschraubte Schnecke zur Höhenverstellung genutzt werden. Ebenso ist eine hydraulische Höhenverstellung möglich.

Die Erfindung soll nachstehend anhand eines Ausführungsbeispiels sowie unter Zuhilfenahme von Figuren näher erläutert werden.

Hierbei zeigen:
- Fig. 1: eine perspektivische Darstellung der erfindungsgemäßen Vorrichtung zur Montage und Demontage von Hydraulikzylindern;
- Fig. 2: eine Längsseitenansicht, eine Draufsicht und eine Stirnseitenansicht der erfindungsgemäßen Vorrichtung mit strichliniiert angedeuteter Kolbenstange mit Kolben sowie Zylinder eines bereits demontierten Hydraulikzylinders und
- Fig. 3: eine perspektivische Detailansicht mit Blick auf die Halterung zur Aufnahme der Kolbenstange nebst Zentrierspindel, Zentrierschlitten und Kolbenstangenaufnahme.

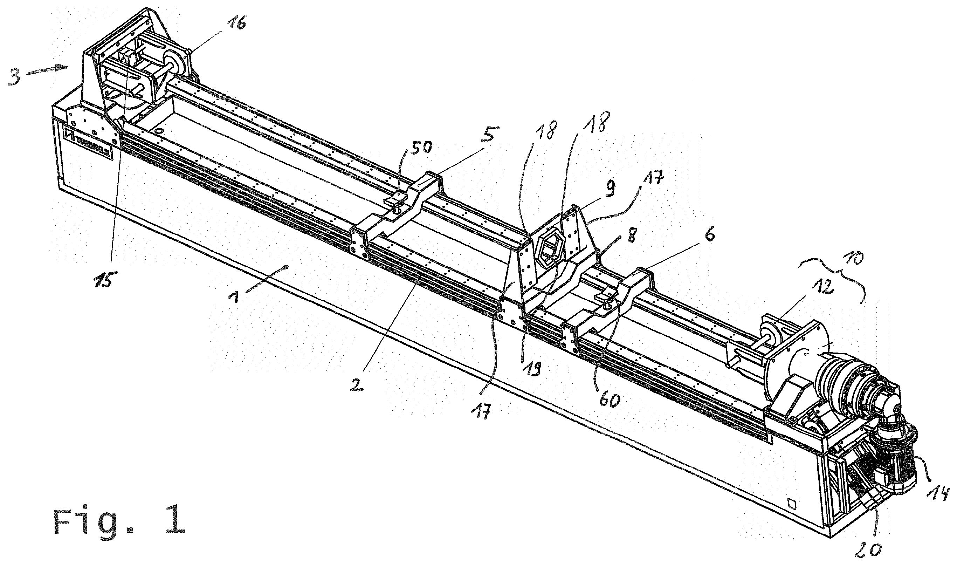

Die erfindungsgemäße Vorrichtung gemäß den Fig. 1 bis 3 geht zunächst aus von einem sockelartigen Maschinengestell 1, das selbsttragend und verankerungsfrei ausgebildet ist. Am bzw. im Maschinengestell 1 sind horizontal angeordnete bzw. horizontal verlaufende Führungsmittel 2 vorhanden.

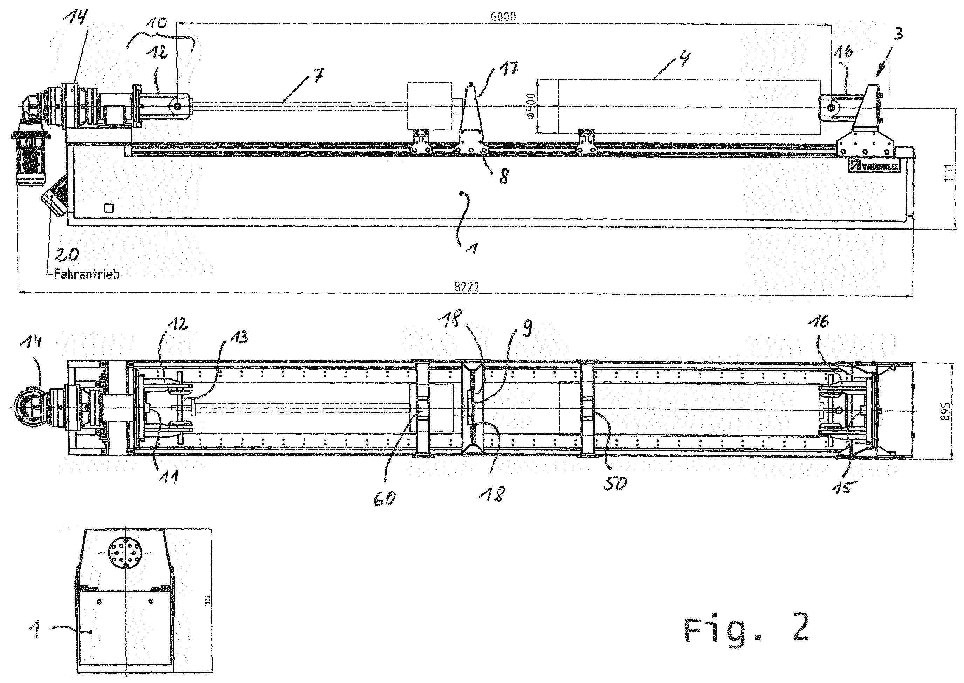

Diese Führungsmittel tragen eine verschiebebewegliche Aufnahme 3 für das Zylinderrohr 4 (siehe Fig. 2) des jeweiligen zu überholenden Hydraulikzylinders, eine Aufnahme 5 als Stütze für das Zylinderrohr sowie eine Aufnahme 6 als Stütze für die Kolbenstange des zu überholenden Hydraulikzylinders.

Die Kolbenstange ist in der Fig. 2 mit dem Bezugszeichen 7 gekennzeichnet.

Weiterhin ist eine Aufnahme 8 für ein Werkzeug 9 vorhanden und es ist eine Halterung 10 zum Fixieren der Kolbenstange 7 des Hydraulikzylinders ausgebildet.

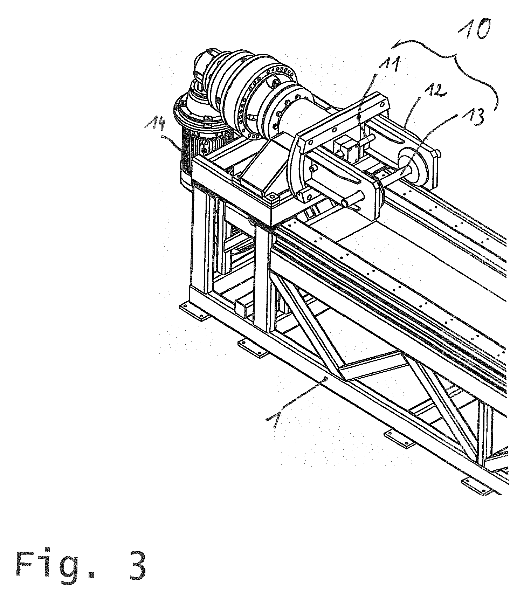

Die Halterung 10 für die Kolbenstange 7 sei anhand der Fig. 3 näher erläutert.

Die Halterung weist einen von einer Zentrierspindel 11 angetriebenen Zentrierschlitten 12 auf, der eine Kolbenstangenaufnahme 13 umfasst.

Über eine optionale Lagerung besteht die Möglichkeit, die Halterung 10 um die Längsachse des Maschinengestells 1 zu drehen, und zwar unter Mitnahme der in der Kolbenstangenaufnahme 13 montierten Kolbenstange 7 (siehe Fig. 2).

Die Drehbewegung wird über einen drehmomentgesteuerten elektromotorischen Antrieb 14 realisiert.

Auch die verschiebebewegliche Aufnahme 3 für das Zylinderrohr 4 weist einen von einer weiteren Zentrierspindel 15 angetriebenen Zentrierschlitten 16 auf, wobei die Verschiebebeweglichkeit in Längsachsenrichtung des Maschinengestells 1 realisiert ist.

Die Werkzeugaufnahme 8 wird durch einen Verschiebeschlitten mit Tragarmen 17 gebildet, welche eine schlitzförmige Ausnehmung 18 zum austauschbaren Halten des Werkzeugs 9 bilden. Die schlitzförmige Ausnehmung 18 kann aber auch einen Adapter aufnehmen, um bereits vorhandene Werkzeuge, wie z.B. Spezialnüsse aufzunehmen, um die Herstellung kostspieliger Spezialwerkzeuge zu vermeiden.

Wie in der Fig. 1 ersichtlich, besitzt das Werkzeug 9 eine Ausformung, ausgebildet als Schlüsselfläche 19. Die Halterung 16 zum Fixieren des Hydraulikzylinders 4 ist fest am Maschinengestell 1 befindlich, insbesondere mit diesem verschraubt, kann aber nach Lösen einer Arretierung um ihre eigene Achse gedreht werden.

Die Aufnahme 3 für das Zylinderrohr 4 und die Aufnahme 8 für das Werkzeug 9, auch gegebenenfalls die Stützen 5 und 6, können über einen elektromotorischen Fahrantrieb 20 in Längsrichtung relativ zueinander verschoben und positioniert werden.

Für die Verschiebebeweglichkeit sind im oder am Maschinengestell 1 entsprechende Rollen- oder Gleitführungen 2 ausgebildet.

Die Stützen 5 und 6, welche eine Aufnahmefläche 50 und 60 besitzen, sind so ausgebildet, dass die Aufnahmeflächen oder Aufnahmekörper in der Höhe verstellt werden können.

Das Maschinengestell 1 ist als massive, selbsttragende Stahlträger- oder Stahlrahmenkonstruktion ausgeführt und ist geeignet, alle im Betrieb der Vorrichtung auftretende Kräfte sicher aufzunehmen, ohne dass Verspannungen oder Lageveränderungen der wesentlichen Komponenten der Vorrichtung gegeben sind.

Mit Hilfe der Zentrierschlitten kann eine sehr exakte Positionierung und Lagezuordnung von Zylinderrohr und Kolbenstange vorgenommen werden, so dass eine exakte beschädigungsfreie Montage und Demontage der jeweiligen zu überholenden Hydraulikzylinder möglich ist. Die durch die von den Tragarmen gebildete beabstandete Ausnehmung zur Aufnahme des eigentlichen Werkzeugs entstehende Öffnung kann dazu benutzt werden, bei zunächst entnommenem Werkzeug 9 mit Hilfe des Fahrantriebs den Kolben mit Kolbenstange vom Zylinderrohr zu trennen. Hiernach wird das Werkzeug 9 eingesetzt und der Werkzeugschlitten mit dem Werkzeug in eine Position verfahren, die es ermöglicht, die Kolbenstangenmutter in die Schlüsselfläche des Werkzeugs hinzubewegen, um dann mit dem Aktivieren des drehmomentgesteuerten Antriebs die Kolbenmutter zu entfernen. Nach z.B. Überholung des Kolbens erfolgt die Montage in umgekehrter Weise, wobei wiederum durch die freie Zugänglichkeit mit Blick auf die Entnahme des Werkzeugs aus dem Schlitten ein Arbeiten ohne Entnahme von Zylinderrohr und/oder Kolbenstange aus der Vorrichtung denkbar ist.

## Patentansprüche

1. Vorrichtung zur Montage und Demontage von Hydraulikzylindern, bestehend aus einem sockelartigen Maschinengestell (1), welches horizontal angeordnete Führungsmittel (2) aufweist, die verschiebebeweglich eine Aufnahme (3) für das Zylinderrohr (4) des Hydraulikzylinders, mindestens eine Aufnahme (5; 6) für eine Stütze (50; 60) und eine Aufnahme (8) für ein Werkzeug (9) tragen, sowie weiterhin mit einer Halterung (10) zum Fixieren der Kolbenstange (7) des Hydraulikzylinders,
**dadurch gekennzeichnet, dass**
die Halterung (10) zum Fixieren der Kolbenstange (7) einen von einer Zentrierspindel (11) angetriebenen Zentrierschlitten (12) besitzt, welcher eine Kolbenstangenaufnahme (13) umfasst, wobei die Halterung um die Längsachse des Maschinengestells (1) drehbar ausgeführt und die Drehbewegung über einen drehmomentgesteuerten elektromotorischen Antrieb (14) realisiert ist.

2. Vorrichtung nach Anspruch 1,
**dadurch gekennzeichnet, dass**
die verschiebebewegliche Aufnahme (3) für das Zylinderrohr (4) einen von einer weiteren Zentrierspindel (15) angetriebenen Zentrierschlitten (16) aufweist, wobei die Verschiebebeweglichkeit in Längsrichtung des Maschinengestells realisiert ist.

3. Vorrichtung nach Anspruch 1 oder 2,
**dadurch gekennzeichnet, dass**
die Werkzeugaufnahme einen Verschiebeschlitten (8) mit Tragarmen (17) umfasst, welche eine schlitzförmige Ausnehmung (18) zum austauschbaren Halten des Werkzeugs (9) aufweisen.

4. Vorrichtung nach Anspruch 3,
**dadurch gekennzeichnet, dass**
das Werkzeug (9) eine Ausformung oder einen Durchbruch, ausgebildet als Schlüsselfläche (19) oder zur Aufnahme eines Werkzeugadapters besitzt.

5. Vorrichtung nach einem der vorangegangenen Ansprüche,
**dadurch gekennzeichnet, dass**
die Halterung (16) zum Fixieren des Hydraulikzylinders (4) kraftableitend mit dem Maschinengestell (1) verbindbar ist.

6. Vorrichtung nach einem der vorangegangenen Ansprüche,
**dadurch gekennzeichnet, dass**
der elektromotorische Antrieb (14) einen Getriebemotor aufweist.

7. Vorrichtung nach einem der vorangegangenen Ansprüche,
**dadurch gekennzeichnet, dass**
der elektromotorische Antrieb (14) eine Drehmomentsensorik hinsichtlich der zwischen Werkzeug (9) und Hydraulikzylinder auftretenden Kräfte oder Momente aufweist.

8. Vorrichtung nach einem der vorangegangenen Ansprüche,
**dadurch gekennzeichnet, dass**
die Aufnahme (3) für das Zylinderrohr (4) und die Aufnahme (8) für das Werkzeug (9) mittels eines elektromotorischen Fahrantriebs (20) verschieblich sind.

9. Vorrichtung nach Anspruch 8,
**dadurch gekennzeichnet, dass**
für die Verschiebebeweglichkeit im oder am Maschinengestell (1) Rollen- oder Gleitführungsnuten ausgebildet sind.

10. Vorrichtung nach einem der vorangegangenen Ansprüche,
**dadurch gekennzeichnet, dass**
die mindestens eine Stütze (50; 60) höhenverstellbar ausgeführt ist.

11. Vorrichtung nach einem der vorangegangenen Ansprüche,
**dadurch gekennzeichnet, dass**
das Maschinengestell (1) selbsttragend und verankerungsfrei ausgebildet ist.

## Claims

1. An apparatus for the mounting and dismounting of hydraulic cylinders, consisting of a pedestal-like machine frame (1) which comprises horizontally arranged guide means (2), which guide means displaceably carry a receptacle (3) for the cylinder liner (4) of the hydraulic cylinder, at least one receptacle (5; 6) for a support (15; 60) and a receptacle (8) for a tool (9), and furthermore having a holder (10) for fixing the piston rod (7) of the hydraulic cylinder, **characterized in that** the holder (10) for fixing the piston rod (7) comprises a centring carriage (12) which is driven by a centring spindle (11) and comprises a piston rod receptacle (13), wherein the holder is formed to be rotatable about the longitudinal axis of the machine frame (1) and the rotational movement is realised by means of a torque-controlled electromotive drive (14).

2. An apparatus according to claim 1, **characterized in that** the displaceable receptacle (3) for the cylinder liner (4) comprises a centring carriage (16) which is driven by a further centring spindle (15), wherein the displacing mobility is realised in the longitudinal direction of the machine frame.

3. An apparatus according to claim 1 or 2, **characterized in that** the tool receptacle comprises a displacing carriage (8) with support arms (17) having a slot-shaped recess (18) for the exchangeable holding of the tool (9).

4. An apparatus according to claim 3, **characterized in that** the tool (9) has a shaped portion or a breakthrough, formed as a key surface (19) or for accommodating a tool adapter.

5. An apparatus according to one of the preceding claims, **characterized in that** the holder (16) for fixing the hydraulic cylinder (4) is connectable in a force-dissipating manner to the machine frame (1).

6. An apparatus according to one of the preceding claims, **characterized in that** the electromotive drive (14) comprises a gear motor.

7. An apparatus according to one of the preceding claims, **characterized in that** the electromotive drive (14) comprises a torque sensor system concerning the forces or torques occurring between the tool (9) and the hydraulic cylinder.

8. An apparatus according to one of the preceding claims, **characterized in that** the receptacle (3) for the cylinder liner (4) and the receptacle (8) for the tool (9) are displaceable by means of an electromotive travel drive (20).

9. An apparatus according to claim 8, **characterized in that** roller or sliding guide grooves are formed in or on the machine frame (1) for the displacing mobility.

10. An apparatus according to one of the preceding claims, **characterized in that** the at least one support (50; 60) is formed to be height-adjustable.

11. An apparatus according to one of the preceding claims, **characterized in that** the machine frame (1) is formed in a self-supporting and non-anchoring manner.

## Revendications

1. Dispositif pour le montage et de démontage de vérins hydrauliques, constitué d'au moins un châssis de machine (1) semblable à un socle, qui comprend des moyens de guidage (2) agencés horizontalement, lesquels portent un récepteur (3) déplaçable en translation pour le tube de vérin (4) du vérin hydraulique, d'au moins un récepteur (5 ; 6) pour un soutien (50 ; 60) et d'un récepteur (8) pour un outil (9), et comprenant en outre une monture (10) pour la fixation de la tige de piston (7) du vérin hydraulique,
**caractérisé en ce que**
la monture (10) pour la fixation de la tige de piston (7) possède un chariot de centrage (12) entraîné par une broche de centrage (11), chariot qui inclut un récepteur de tige de piston (13), dans lequel la monture est réalisée en rotation autour de l'axe longitudinal du châssis de machine (1) et le mouvement de rotation est réalisé via un entraînement à moteur électrique (14) commande selon le couple.

2. Dispositif selon la revendication 1,
**caractérisé en ce que** le récepteur déplaçable en translation (3) pour le tube de vérin (4) comprend un chariot de centrage (16) entraîné par une autre broche de centrage (15), et la mobilité en translation est réalisée en direction longitudinale du châssis de machine.

3. Dispositif selon la revendication 1 ou 2,
**caractérisé en ce que** le récepteur pour outil inclut un chariot en translation (8) avec des bras porteurs (17), lesquels comportent un évidement (18) en forme de fente pour le maintien interchangeable de l'outil (9).

4. Dispositif selon la revendication 3,
**caractérisé en ce que** l'outil (9) possède un relief ou une traversée, réalisé(e) sous la forme d'une surface à clé (19) ou pour la réception d'un adaptateur d'outil.

5. Dispositif selon l'une des revendications précédentes,
**caractérisé en ce que** la monture (16) pour la fixation du vérin hydraulique (4) est susceptible d'être reliée au châssis de machine (A) de manière à évacuer les forces.

6. Dispositif selon l'une des revendications précédentes,
**caractérisé en ce que** l'entraînement à moteur électrique (14) comprend un groupe motoréducteur.

7. Dispositif selon l'une des revendications précédentes,
**caractérisé en ce que** l'entraînement à moteur électrique (14) comprend des capteurs de couple de rotation pour ce qui concerne les forces ou les couples qui se produisent entre l'outil (9) et le vérin hydraulique.

8. Dispositif selon l'une des revendications précédentes,
**caractérisé en ce que** le récepteur (3) pour le tube de vérin (4) et le récepteur (8) pour l'outil (9) sont déplaçables en translation au moyen d'un entraînement de déplacement à moteur électrique (20).

9. Dispositif selon la revendication 8,
**caractérisé en ce que** des gorges de guidage de galets ou des gorges de guidage à coulissement sont réalisées dans ou sur le châssis de machine (1) pour la mobilité en translation.

10. Dispositif selon l'une des revendications précédentes,
**caractérisé en ce que** ledit au moins un soutien (50 ; 60) est réalisé avec possibilité de déplacement en hauteur.

11. Dispositif selon l'une des revendications précédentes,
**caractérisé en ce que** le châssis de machine (1) est réalisé autoporteur et dépourvu d'ancrage.
